# FASCICULE DE BREVET EUROPEEN

(11) **EP 1 097 903 B1**
(45) Date de publication et mention de la délivrance du brevet: **11.06.2003**
(21) Numéro de dépôt: 00403030.0
(22) Date de dépôt: 31.10.2000
(51) Int. Cl.: C01B 3/56, B01D 53/22, C07C 7/144, C10L 3/10, C01B 3/36

(54) **Procédé et installation pour la production d'hydrogène pur à partir d'un gaz contenant de l'hélium**
Verfahren und Vorrichtung zur Herstellung von reinem Wasserstoff ausgehend von einem Gas das Helium enthält
Process and apparatus for the production of pure hydrogen starting from a gas containing helium

(30) Priorité: 08.11.1999 FR 9913987
(43) Date de publication de la demande: 09.05.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Fuentes, François, 78110 Le Vesinet (FR)
(74) Mandataire: Le Moenner, Gabriel

(56) Documents cités:
- EP-A- 0 742 172
- DE-A- 3 421 833
- DE-U- 29 709 266
- US-A- 5 837 032
- TZEVELEKOS K P ET AL: "Experimental investigation on separations of condensable from non-condensable vapors using mesoporous membranes" MICROPOROUS AND MESOPOROUS MATERIALS,US,ELSEVIER SCIENCE PUBLISHING, NEW YORK, vol. 31, no. 1-2, octobre 1999 (1999-10), pages 151-162, XP004179866 ISSN: 1387-1811

## Description

La présente invention concerne un procédé pour la production d'hydrogène pur à partir d'un gaz tel que du gaz naturel, contenant de l'hélium. Elle concerne plus spécifiquement un procédé permettant de produire de l'hydrogène de pureté satisfaisante pour un usage dans le secteur de l'électronique.

Elle concerne également une installation pour la mise en oeuvre de ce procédé.

Parmi les divers procédés connus dans la technique, une des méthodes classiques pour produire de l'hydrogène de pureté élevée consiste à effectuer un vaporéformage d'hydrocarbures suivi d'une conversion catalytique à la vapeur du monoxyde de carbone présent dans le mélange gazeux obtenu. Le gaz de synthèse résultant est ensuite purifié dans une unité PSA (Pressure Swing Adsorption ou adsorption à pression modulée).

La source de ces hydrocarbures est généralement un réseau de gaz naturel qui contient du méthane et d'autres hydrocarbures lourds mais également des composés soufrés, de l'azote, du dioxyde de carbone et de l'hélium.

La majorité de ces impuretés peut être éliminée au cours du processus de production et de purification d'hydrogène, à l'exception de l'hélium qui est un composé chimiquement inerte. Celui-ci est généralement présent à raison de 100 à 1000 ppm et possède un faible pouvoir d'adsorption, de sorte que l'on retrouve cet élément presque intégralement dans l'hydrogène purifié produit.

Cette impureté n'est généralement pas gênante dans la plupart des utilisations de l'hydrogène purifié par ce type de procédé.

Cependant, dans le domaine de l'électronique, il est nécessaire de disposer d'hydrogène de pureté très élevée et il devient ainsi souhaitable de produire de l'hydrogène ne contenant pas d'hélium.

Actuellement, pour produire de l'hydrogène exempt d'hélium, on utilise généralement une matière première ne contenant pas cette impureté. On peut ainsi prévoir un procédé par vaporéformage tel que précité, à partir de naphta ou de méthanol. Il s'agit néanmoins de produits semi-finis et le coût de cette matière première est assez élevé. Une autre voie est la production d'hydrogène par électrolyse de l'eau. Celle-ci requiert cependant beaucoup d'énergie et est mise en oeuvre essentiellement pour des petites productions d'hydrogène purifié.

Du point de vue de la séparation de l'hélium contenu dans l'hydrogène, les moyens dont on dispose dans la technique sont limités soit à la liquéfaction du gaz naturel par traitement cryogénique, soit à l'utilisation de membranes métalliques telles que des membranes palladium en aval d'une unité PSA, l'utilisation de telles membranes supposant de disposer d'un produit déjà préalablement purifié. Il en résulte que la séparation de l'hélium présent dans l'hydrogène reste très difficile et coûteuse à ce jour.

L'objectif de la présente invention est de fournir un procédé permettant de produire de l'hydrogène de très grande pureté, ne contenant pas en particulier d'hélium.

Un autre objectif de la présente invention est de fournir un tel procédé utilisant un gaz pouvant contenir de l'hélium comme matière première, en particulier du gaz naturel.

Un autre objectif de l'invention est encore de fournir un tel procédé de mise en oeuvre relativement simple et à coût réduit.

L'objectif de la présente invention est aussi de fournir une installation pour la mise en oeuvre d'un tel procédé.

Ces objectifs ainsi que d'autres qui apparaîtront à la lumière de la description qui va suivre sont atteints à l'aide d'un procédé pour la production d'hydrogène de pureté élevée, sensiblement exempt d'hélium, à partir d'un gaz d'alimentation contenant essentiellement des hydrocarbures, notamment du méthane, et des impuretés dont de l'hélium, du type comprenant la conversion des hydrocarbures, notamment du méthane, en hydrogène et en dioxyde de carbone, et la purification dans une unité PSA de l'hydrogène contenu dans le mélange gazeux résultant, caractérisé en ce que, préalablement à la conversion des hydrocarbures, notamment du méthane, le gaz d'alimentation est traité dans une unité de séparation par perméation produisant un gaz rétentat appauvri en hélium, contenant essentiellement des hydrocarbures, notamment du méthane, et un gaz perméat enrichi en hélium, ledit gaz rétentat étant ensuite traité dans ladite unité de conversion des hydrocarbures, notamment du méthane, en produisant un mélange gazeux pratiquement exempt d'hélium, contenant de l'hydrogène.

Selon d'autres caractéristiques de l'invention :
- le gaz d'alimentation est du gaz naturel contenant de l'hélium, notamment entre 100 et 1 000 ppm d'hélium ;
- la conversion des hydrocarbures, notamment du méthane, contenus dans le gaz rétentat appauvri en hélium, est réalisée par vaporéformage puis conversion catalytique à la vapeur d'eau du monoxyde de carbone produit en dioxyde de carbone ;
- une partie du gaz d'alimentation est utilisée comme source d'énergie pour des brûleurs produisant la chaleur nécessaire à l'opération de vaporéformage ;
- le gaz perméat résiduaire à basse pression de l'unité de séparation par perméation est utilisé comme source d'énergie pour des brûleurs produisant la chaleur nécessaire à l'opération de vaporéformage ;
- le gaz résiduaire issu de l'unité de purification PSA est utilisé comme source d'énergie pour les brûleurs produisant la chaleur nécessaire à l'opération de vaporéformage
- la conversion des hydrocarbures, notamment du méthane, contenus dans le gaz rétentat appauvri en hélium, est réalisée par oxydation partielle ;
- le gaz perméat résiduaire à basse pression de l'unité de séparation par perméation et/ou le gaz résiduaire de l'unité PSA sont utilisés comme source d'énergie pour produire de la vapeur d'eau dans une chaudière auxiliaire.

L'invention a également pour objet une installation pour la production d'hydrogène de pureté élevée, sensiblement exempt d'hélium, à partir d'un gaz d'alimentation contenant des hydrocarbures, notamment du méthane et des impuretés dont de l'hélium, du type comprenant une unité comprenant des moyens de conversion des hydrocarbures, notamment du méthane, en hydrogène et en dioxyde de carbone, et une unité de purification par adsorption à pression modulée ou PSA de l'hydrogène contenu dans le mélange gazeux résultant, caractérisée en ce qu'elle comprend en outre, en amont desdits moyens de conversion des hydrocarbures, notamment du méthane, une unité de séparation par perméation, des moyens d'amenée du gaz d'alimentation dans ladite unité de perméation, et des moyens d'amenée du gaz rétentat produit dans l'unité de séparation par perméation, auxdits moyens de conversion dès hydrocarbures, notamment du méthane.

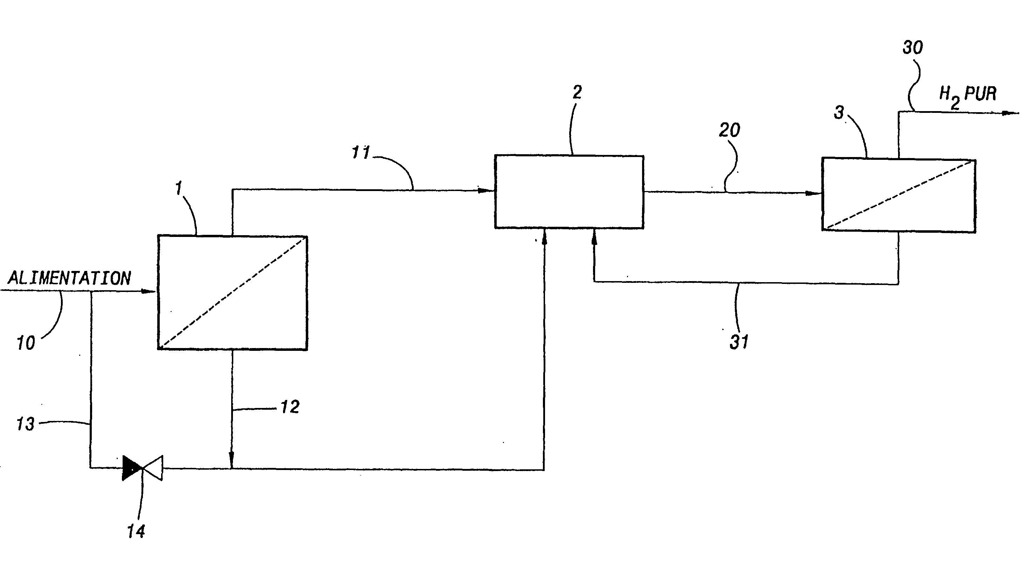

Un exemple du procédé selon l'invention va être décrit plus en détail en référence à la figure annexée sur laquelle est schématisée une installation selon l'invention.

Le gaz d'alimentation mis en oeuvre dans le procédé selon l'invention est généralement du gaz naturel dont la teneur en hélium est comprise entre 100 et 1000 ppm.

Le gaz d'alimentation 10 est amené dans une unité de séparation par perméation 1. Dans cette unité, on utilise tout type de membrane permettant essentiellement la séparation de l'hélium des autres constituants présents dans le gaz d'alimentation 10, principalement les hydrocarbures, en particulier le méthane.

La séparation dans l'unité 1 est réalisée de préférence à une température comprise entre 30 et 90°C.

A la sortie de l'unité 1, on obtient un mélange gazeux 11, appelé gaz rétentat, appauvri en hélium et contenant essentiellement des hydrocarbures, notamment du méthane, et d'autres impuretés issues du gaz d'alimentation. Il est également produit un gaz perméat 12 à basse pression riche en hélium.

Le gaz rétentat 11 est ensuite traité dans une unité 2 de conversion des hydrocarbures, notamment du méthane, pour produire de l'hydrogène et du monoxyde de carbone qui est ensuite converti catalytiquement en dioxyde de carbone, à l'aide de vapeur d'eau. L'unité 2 comprend essentiellement un premier réacteur, dit vaporéformeur, suivi d'au moins un second réacteur de conversion catalytique du monoxyde de carbone.

En sortie de l'unité 2, on obtient ainsi un mélange gazeux 20 contenant essentiellement de l'hydrogène, du dioxyde de carbone, du monoxyde de carbone résiduel ainsi que des impuretés résiduelles présentes dans le gaz d'alimentation 10. Le mélange gazeux 20 est pratiquement exempt d'hélium.

Le flux 20 d'hydrogène impur est ensuite traité dans une unité PSA 3 dans les conditions classiquement utilisées. On obtient un flux 30 d'hydrogène de pureté élevée, ne contenant pratiquement plus d'hélium.

Du point de vue du bilan thermique du procédé selon l'invention, une partie 13 du gaz d'alimentation 10 peut être utilisée, après détente dans une vanne de détente 14, comme source d'énergie pour les brûleurs produisant la chaleur nécessaire à l'opération de réformage, endothermique, réalisée dans l'unité 2. Le gaz perméat 12 produit à basse pression dans l'unité de séparation 1 peut être utilisé, conjointement au flux 13, à cet effet. Le gaz résiduaire 31 issu de l'unité PSA 3 finale peut également servir de source d'énergie pour les brûleurs permettant le réformage des hydrocarbures dans l'unité 2.

En variante, la conversion des hydrocarbures peut être réalisée par d'autres procédés, notamment par oxydation partielle dans l'unité 2, les flux résiduaires 12 et 31 précités pouvant alors être utilisés comme source d'énergie pour une production de vapeur d'eau dans une chaudière auxiliaire(nonreprésentée).

Le procédé selon l'invention présente ainsi l'avantage de permettre la séparation de l'hélium lors de la production d'hydrogène sans modifier le bilan thermique global de ladite production d'hydrogène mais en utilisant l'énergie du système pour éliminer l'hélium présent dans le gaz d'alimentation de cette production.

Le procédé selon l'invention permet de produire de l'hydrogène de pureté de l'ordre de 99,99 % alors que selon la technique connu, la pureté de l'hydrogène produit ne pouvait excéder 99,9 %.

Un exemple de séparation de l'hélium dans l'unité 1 est donné ci-après à titre illustratif et non limitatif :

| | GAZ NATUREL (10) | Rétentat (11) | Perméat (12) |
|---|---|---|---|
| PRESSION bars absolus | 35 | 34 | 1,3 |
| TEMPERATURE °C | 35 | 70 | 70 |
| DEBIT Nm3/h | 5000 | 4190 | 810 |

| COMPOSITION mol. | | | |
|---|---|---|---|
| He | 0,0005 | 0,000039 | 0,00289 |
| N₂ | 0,01 | 0,0096 | 0,01206 |
| CH₄ | 0,9537 | 0,9518 | 0,96353 |
| C₂H₆ | 0,03 | 0,03289 | 0,01505 |
| C₃H₈ | 0,003 | 0,00337 | 0,00107 |
| i.C4 | 0,0006 | 0,00068 | 0,0002 |
| n. C4 | 0,0006 | 0,00068 | 0,0002 |
| n.C5 | 0,0006 | 0,00068 | 0,00018 |
| CO₂ | 0,001 | 0,00026 | 0,00483 |

L'hélium est éliminé dans une proportion de 93,5 %.

## Revendications

1. Procédé pour la production d'hydrogène (30) de pureté élevée, sensiblement exempt d'hélium, à partir d'un gaz d'alimentation (10) contenant essentiellement des hydrocarbures, notamment du méthane, et des impuretés dont de l'hélium, du type comprenant la conversion des hydrocarbures, notamment du méthane, en hydrogène et en dioxyde de carbone, dans une unité de conversion (2), et la purification dans une unité d'adsorption à pression modulée ou PSA (3) de l'hydrogène contenu dans le mélange gazeux résultant, **caractérisé en ce que**, préalablement à la conversion des hydrocarbures, notamment du méthane, le gaz d'alimentation (10) est traité dans une unité de séparation par perméation (1) produisant un gaz rétentat (11) appauvri en hélium, contenant essentiellement des hydrocarbures, notamment du méthane, et un gaz perméat (12) enrichi en hélium, ledit gaz rétentat (11) étant ensuite traité dans ladite unité (2) de conversion des hydrocarbures, notamment du méthane, en produisant un mélange gazeux (20) pratiquement exempt d'hélium, contenant de l'hydrogène.

2. Procédé selon la revendication 1, **caractérisé en ce que** le gaz d'alimentation (10) est du gaz naturel contenant de l'hélium, notamment entre 100 et 1 000 ppm d'hélium.

3. Procédé selon la revendication 1 ou 2, **caractérisé en ce que** la conversion (2) des hydrocarbures, notamment du méthane, contenus dans le gaz rétentat (11) appauvri en hélium, est réalisée par vaporéformage puis conversion catalytique à la vapeur d'eau du monoxyde de carbone produit en dioxyde de carbone.

4. Procédé selon la revendication 3, **caractérisé en ce qu'**une partie (13) du gaz d'alimentation (10) est utilisée comme source d'énergie pour des brûleurs produisant la chaleur nécessaire à l'opération de vaporéformage (2).

5. Procédé selon la revendication 3 ou 4, **caractérisé en ce que** le gaz perméat (12) résiduaire à basse pression de l'unité de séparation par perméation (1) est utilisé comme source d'énergie pour des brûleurs produisant la chaleur nécessaire à l'opération de vaporéformage (2).

6. Procédé selon la revendication 4 ou 5, **caractérisé en ce que** le gaz résiduaire (31) issu de l'unité de purification PSA (3) est utilisé comme source d'énergie pour les brûleurs produisant la chaleur nécessaire à l'opération de vaporéformage (2).

7. Procédé selon la revendication 1 ou 2, **caractérisé en ce que** la conversion (2) des hydrocarbures, notamment du méthane, contenus dans le gaz rétentat (11) appauvri en hélium, est réalisée par oxydation partielle.

8. Procédé selon la revendication 7, **caractérisé en ce que** le gaz perméat (12) résiduaire à basse pression de l'unité de séparation par perméation (1) et/ou le gaz résiduaire (31) de l'unité PSA (3) sont utilisés comme source d'énergie pour produire de la vapeur d'eau dans une chaudière auxiliaire.

9. Installation pour la production d'hydrogène (30) de pureté élevée, sensiblement exempt d'hélium, à partir d'un gaz d'alimentation (10) contenant des hydrocarbures, notamment du méthane, et des impuretés dont de l'hélium, du type comprenant une unité (2) comprenant des moyens de conversion des hydrocarbures, notamment du méthane, en hydrogène et en dioxyde de carbone., et une unité (3) de purification par adsorption à pression modulée ou PSA de l'hydrogène contenu dans le mélange gazeux (20) résultant, **caractérisée en ce qu'**elle comprend en outre, en amont desdits moyens de conversion des hydrocarbures, notamment du méthane, une unité (1) de séparation par perméation, des moyens d'amenée du gaz d'alimentation (10) dans ladite unité (1) de perméation, et des moyens d'amenée du gaz rétentat (11) produit dans l'unité (1) de séparation par perméation, auxdits moyens de conversion des hydrocarbures, notamment du méthane.

## Claims

1. Process for the production of high-purity hydrogen (30) substantially free of helium, starting from a feed gas (10) containing essentially hydrocarbons, especially methane, and impurities, including helium, of the type comprising the conversion of the hydrocarbons, especially methane into hydrogen and into carbon dioxide, in a conversion unit (2), and the purification, in a pressure swing adsorption or PSA unit (3), of the hydrogen contained in the resulting gas mixture, **characterized in that**, prior to the conversion of the hydrocarbons, especially methane, the feed gas (10) is treated in a permeation separation unit (1) that produces a helium-depleted retentate gas (11) containing essentially hydrocarbons, especially methane, and a helium-rich permeate gas (12), the said retentate gas (11) then being treated in the said unit (2) for converting the hydrocarbons, especially methane, producing a gas mixture (20), practically free of helium, containing hydrogen.

2. Process according to Claim 1, **characterized in that** the feed gas (10) is natural gas containing helium, especially between 100 and 1000 ppm of helium.

3. Process according to Claim 1 or 2, **characterized in that** the conversion (2) of the hydrocarbons, especially methane, contained in the helium-depleted retentate gas (11), is carried out by steam reforming and then steam catalytic conversion of the carbon monoxide produced, into carbon dioxide.

4. Process according to Claim 3, **characterized in that** a portion (13) of the feed gas (10) is used as energy source for burners producing the heat necessary for the steam reforming operation (2).

5. Process according to Claim 3 or 4, **characterized in that** the low-pressure waste permeate gas (12) from the permeation separation unit (1) is used as energy source for burners producing the heat necessary for the steam reforming operation (2).

6. Process according to Claim 4 or 5, **characterized in that** the waste gas (31) coming from the PSA purification unit (3) is used as energy source for the burners producing the heat necessary for the steam reforming operation (2).

7. Process according to Claim 1 or 2, **characterized in that** the conversion (2) of the hydrocarbons, especially methane, contained in the helium-depleted retentate gas (11) is carried out by partial oxidation.

8. Process according to Claim 7, **characterized in that** the low-pressure waste permeate gas (12) from the permeation separation unit (1) and/or the waste gas (31) from the PSA unit (3) are used as energy source for producing steam in an auxiliary boiler.

9. Plant for the production of high-purity hydrogen (30), substantially free of helium, starting from a feed gas (10) containing hydrocarbons, especially methane, and impurities including helium, of the type comprising a unit (2) having means for converting the hydrocarbons, especially methane, into hydrogen and carbon dioxide and a unit (3) for purifying the hydrogen contained in the resulting gas mixture (20) by pressure swing adsorption or PSA, **characterized in that** it furthermore comprises, upstream of the said means for converting the hydrocarbons, especially methane, a permeation separation unit (1), means (10) for delivering the feed gas into the said permeation unit (1) and means for delivering the retentate gas (11) produced in the permeation separation unit (1) into the said means for converting the hydrocarbons, especially methane.

## Patentansprüche

1. Verfahren zur Produktion von hochreinem, weitgehend heliumfreiem Wasserstoff (30) aus einem Einsatzgas (10), das im wesentlichen Kohlenwasserstoffe, insbesondere Methan, und Verunreinigungen einschließlich Helium enthält, bei dem Kohlenwasserstoffe, insbesondere Methan, in einer Umwandlungseinheit (2) in Wasserstoff und Kohlendioxid umgewandelt werden und der in dem erhaltenen Gasgemisch enthaltene Wasserstoff in einer Druckwechselabsorptionseinheit bzw. PSA-Einheit (3) gereinigt wird, **dadurch gekennzeichnet, daß** man vor der Umwandlung der Kohlenwasserstoffe, insbesondere des Methans, das Einsatzgas (10) in einer Permeationstrenneinheit (1) behandelt, wobei man ein an Helium verarmtes Retentatgas (11), das im wesentlichen Kohlenwasserstoffe, insbesondere Methan, enthält, und ein mit Helium angereichertes Permeatgas (12) erhält, wobei das Retentatgas (11) dann in der Einheit (2) zur Umwandlung von Kohlenwasserstoffen, insbesondere Methan, behandelt wird, wobei man ein Wasserstoff enthaltendes, praktisch heliumfreies Gasgemisch (20) erhält.

2. Verfahren nach Anspruch 1, **dadurch gekennzeichnet, daß** man als Einsatzgas (10) heliumhaltiges Erdgas mit einem Heliumgehalt zwischen 100 und 1000 ppm verwendet.

3. Verfahren nach Anspruch 1 oder 2, **dadurch gekennzeichnet, daß** man die Umwandlung (2) der in dem an Helium verarmten Retentatgas (11) enthaltenen Kohlenwasserstoffe, inbesondere des Methans, durch Dampfreformieren und anschließende katalytische Konvertierung des erzeugten Kohlenmonoxids mit Dampf in Kohlendioxid vornimmt.

4. Verfahren nach Anspruch 3, **dadurch gekennzeichnet, daß** man einen Teil (13) des Einsatzgases (10) als Energiequelle für die die für das Dampfreformieren (2) benötigte Wärme liefernden Brenner verwendet.

5. Verfahren nach Anspruch 3 oder 4, **dadurch gekennzeichnet, daß** man das Niederdruck-Permeatrestgas (12) aus der Permeationstrenneinheit (1) als Energiequelle für die die für das Dampfreformieren (2) benötigte Wärme liefernden Brenner verwendet.

6. Verfahren nach Anspruch 4 oder 5, **dadurch gekennzeichnet, daß** man das Restgas (31) aus der PSA-Reinigungseinheit (3) als Energiequelle für die die für das Dampfreformieren (2) benötigte Wärme liefernden Brenner verwendet.

7. Verfahren nach Anspruch 1 oder 2, **dadurch gekennzeichnet, daß** man die Umwandlung (2) der in dem an Helium verarmten Retentatgas (11) enthaltenen Kohlenwasserstoffe, inbesondere des Methans, durch Partialoxidation vornimmt.

8. Verfahren nach Anspruch 7, **dadurch gekennzeichnet, daß** man das Niederdruck-Permeatrestgas (12) aus der Permeationstrenneinheit (1) und/oder das Restgas (31) aus der PSA-Einheit (3) als Energiequelle zur Erzeugung von Wasserdampf in einem Hilfskessel verwendet.

9. Anlage zur Produktion von hochreinem, weitgehend heliumfreiem Wasserstoff (30) aus einem Einsatzgas (10), das Kohlenwasserstoffe, insbesondere Methan, und Verunreinigungen einschließlich Helium enthält, mit einer Einheit (2) mit Einrichtungen zur Umwandlung von Kohlenwasserstoffen, insbesondere Methan, in Wasserstoff und Kohlendioxid und einer Einheit (3) zur Reinigung des in dem erhaltenen Gasgemisch (20) enthaltenen Wasserstoffs mittels Druckwechseladsorption bzw. PSA, **dadurch gekennzeichnet, daß** sie außerdem auch noch vor den Einrichtungen zur Umwandlung von Kohlenwasserstoffen, insbesondere Methan, eine Permeationstrenneinheit (1), Einrichtungen zur Zuführung des Einsatzgases (10) zu der Permeationseinheit (1) und Einrichtungen zur Zuführung des in der Permeationstrenneinheit (1) anfallenden Retentatgases (11) zu den Einrichtungen zur Umwandlung von Kohlenwasserstoffen, insbesondere Methan, aufweist.
